(19) Europäisches Patentamt
European Patent Office
Office européen des brevets

(11) Veröffentlichungsnummer: **0 176 100**
**B1**

(12) # EUROPÄISCHE PATENTSCHRIFT

(45) Veröffentlichungstag der Patentschrift: **22.06.88**

(51) Int. Cl.⁴: **C 22 B 3/00**, C 22 B 11/06

(21) Anmeldenummer: **85112207.7**

(22) Anmeldetag: **26.09.85**

(54) **Hydrometallurgisches Verfahren zur Aufarbeitung von Anodenschlamm aus der Kupferelektrolyse.**

(30) Priorität: **26.09.84 AT 3047/84**
**25.01.85 AT 199/85**

(43) Veröffentlichungstag der Anmeldung:
**02.04.86 Patentblatt 86/14**

(45) Bekanntmachung des Hinweises auf die Patenterteilung:
**22.06.88 Patentblatt 88/25**

(84) Benannte Vertragsstaaten:
**BE DE FR GB IT NL SE**

(56) Entgegenhaltungen:
**EP - A - 0 089 184**
**DD - A - 146 712**
**DE - A - 2 117 513**
**DE - A - 3 145 006**
**DE - B - 2 543 027**
**GB - A - 452 832**
**US - A - 2 060 539**
**US - A - 4 094 668**

(73) Patentinhaber: **Austria Metall Aktiengesellschaft, A-5282 Braunau am Inn (AT)**

(72) Erfinder: **Bertha, Josef, Ing., Faberstrasse 29d, A-6230 Brixlegg (AT)**

(74) Vertreter: **Hain, Leonhard, Dipl.-Ing., Tal 18/IV, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 176 100 B1

ACTORUM AG

**Beschreibung**

Die Erfindung betrifft ein hydrometallurgisches Verfahren zur Aufarbeitung von Anodenschlamm aus der Kupferelektrolyse und ähnlicher Rohstoffe zur Gewinnung von Silber gemäss dem Oberbegriff des Patentanspruches 1.

Der bei der elektrolytischen Kupferraffination anfallende Anodenschlamm enthält je nach Herkunft der Anoden wechselnde Mengen an Silber, Gold, Platin, Palladium, Selen, Tellur, Arsen, Antimon, Kupfer, Nickel, Blei u.a. Der Hauptzweck der Anodenschlamm-Aufbereitung ist die Abtrennung und Gewinnung der wertvollen Metalle, wie Silber. Bei den herkömmlichen Verfahren werden die Anodenschlämme in einem Flammofen pyrometallurgisch aufgeschlossen (Treibverfahren) und das erhaltene Anodensilber elektrochemisch weiterbehandelt. Diese Verfahren sind besonders arbeits-, zeit- und energieaufwendig. Neuere Verfahren kombinieren nasschemische und pyrometallurgische Verfahrensschritte. So wird bei dem Verfahren gemäss der US-A-4 002 544 oder DD-B-2 543 027) der entkupferte Anodenschlamm bei ca. 160–300 °C sulfatisierend geröstet, um die Kupfer- und Silberselenide und -telluride zu zersetzen. Es werden dabei in der heissen Schwefelsäure nur Ag, Se und Te gelöst, und zwar ca. 95% des eingesetzten Ag, Se und Te. Aus dem filtrierten Salzschlamm wird durch eine Laugung miz heissem Wasser Ni herausgelöst und aus dem Restschlamm das Au, Pt und Pd nach bekannten Verfahren gewonnen. Aus dem schwefelsauren Filtrat scheidet man nach Verdünnung durch Elektrolyse das Ag, Se und Te kathodisch ab, schmilzt das erhaltene Metallpulver unter Luftzufuhr ein ($SeO_2$ und $TeO_2$ verflüchtigen) und führt das Metall als Anodensilber der Silberelektrolyse zu. Dieses Verfahren umgeht wohl die Schmelzarbeit im Flammofen, erfordert aber eine zusätzliche Gewinnungselektrolyse für die Abscheidung von Ag, Se und Te. Ausserdem ist mit der sulfatisierenden Röstung keine exakte Trennung der Komponenten möglich.

Bei einem anderen bekannten Verfahren (DDR-C-146 712, 1981) wird der von Se und Te befreite Anodenschlamm zur Abtrennung von Ag, Cu und Pb einer salpetersauren Laugung unterworfen, wobei Ag, Cu und Pb als Nitrate in Lösung gehen und über eine Silberelektrolyse weiterverarbeitet werden, während im Schlammrückstand das gesamte Au, Pt und Pd nach einem der bekannten pyro- oder hydrometallurgischen Verfahren gewonnen werden kann. Das in der salpetersauren Lösung enthaltene Silber wird als Hauptmenge durch eine Gewinnungselektrolyse abgeschieden und der Restsilbergehalt durch Zementation mit Cu gewonnen. Aus der entsilberten Lösung wird das Pb mit $H_2SO_4$ als $PbSO_4$ ausgefällt, abfiltriert, das Filtrat zur Trennung von Salpetersäure und Schwefelsäure destilliert und rektifiziert und der im Destillationssumpf verbleibende Kristallbrei mit $H_2O$ aufgenommen und zu Cu oder Kupfersalz verarbeitet. Bei Anwesenheit von Pd im Anodenschlamm ist dieses Verfahren nicht anwendbar, weil Pd in Salpetersäure zum grössten Teil löslich ist und ein eigener Arbeitsgang zur Entfernung dieses Wertmetalls erst entwickelt werden muss. Ein weiterer Nachteil ist, dass infolge des hohen Pd- und Cu-Gehaltes ständig eine überaus kostenaufwendige Elektrolytaufbereitung durchgeführt werden muss.

Als weiteres Verfahren wurde die direkte Chlorierung des Anodenschlammes ohne vorherige Pb-Abtrennung (DE-A-2 117 513) bekannt. Der Anodenschlamm wird mit verdünnter Salzsäure zu einem dünnflüssigen Brei angerührt, in den unter Rühren gasförmiges Chlor bei Temperaturen um 100 °C eingeleitet wird, um fast alle im Schlamm enthaltenen Metalle, mit Ausnahme von Silber, zu lösen. Es muss heiss filtriert und auch heiss nachgewaschen werden, um die Hauptmenge des Pb als $PbCl_2$ zu entfernen. Anschliessend erfolgt die Extraktion des AgCl mit Ammoniak, wobei Ag von den restlichen Begleitelementen Sb, Sn und $SiO_2$ getrennt wird. Die Gewinnung des Silbers aus der ammonialkalischen Lösung erfolgt durch Verdampfen des Ammoniaks, Digerieren des AgCl-Niederschlages in einer NaOH-Lösung und Reduktion des entstandenen $Ag_2O$ durch reduzierende Zucker zu reinem, pulverförmigen Silbermetall, das in eine handelsübliche Form umgeschmolzen werden muss. Nachteilig sind bei diesem Verfahren die Anwendung von $Cl_2$-Gas in stark HCl-saurer Lösung (bis 12 n = 432 g HCl/l!) bei ca. 100 °C, das schwierig zu beherrschende Korrosionsprobleme für die Apparaturen bringt, der notwendige Einsatz von Rückflusskühlern für HCl-Gas/Dampf, und ausserdem die Abtrennung von $PbCl_2$ aus Schlämmen grosstechnisch wegen der Temperaturabfälle in den Filterpressen und Ableitungen (Verstopfungen) kaum beherrschbar ist. Es ist auch hier mit einer exakten Trennung von Pb und Ag nicht zu rechnen.

Der Erfindung liegt daher die Aufgabe zugrunde, ein hydrometallurgisches Verfahren zur Aufarbeitung von Anodenschlamm oder ähnlicher Rohstoffe vorzuschlagen, mit dem ein möglichst vollständiges Abtrennen des Silbers von den übrigen im Anodenschlamm enthaltenen Wertmetallen auf kurzem Wege und mit hohem Ausbringen ermöglicht wird.

Diese Aufgabe wird mit einem Verfahren nach dem Oberbegriff des Patentanspruches 1 erfindungsgemäss durch die Kennzeichnungsmerkmale dieses Patentanspruches gelöst.

Vorteilhafte Weiterentwicklungen sind in Unteransprüchen beansprucht.

Das erfindunggemässe Verfahren wird nachfolgend näher beschrieben:

Der Anodenschlamm, vorzugsweise in bekannter Weise durch eine nasschemische Behandlung von säurelöslichem Kupfer und Nickel sowie von Blei befreit, wird zur Zerstörung der sehr stabilen Selenide, Telluride und anderer schwer löslicher Verbindungen einer Chlorierung in salzsaurer Lösung unterzogen. Zum Unterschied von anderen verfahren, die auch eine Chlorierung durchführen, wird bei dieser Neuentwicklung die Chlorierung mit Natriumhypochlorit derart durchgeführt, dass

in die kalte, salzsaure Schlammsuspension eine konzentrierte NaOCl-Lösung eingeleitet wird. Dabei entsteht direkt an der Eintrittstelle des NaOCl Chlor instatu nascendi, das äusserst reaktiv ist und in relativ kurzer Zeit die vorhandenen stabilen Verbindungen von Selen und Tellur aufspaltet, Au, Pd, Se, Te, Pt in Lösung bringt und das Ag quantitativ zu AgCl umwandelt.

Reaktionsgleichungen:

$NaOCl + 2\,HCl \rightarrow NaCl + Cl_2 + H_2O$
$Ag_2Se + 4\,O + 2\,Cl^- \rightarrow 2\,AgCl + SeO_4^{2-}$

Der Vorteil gegenüber der üblichen Direktchlorierung mit Chlorgas ist, neben der Bildung von sehr reaktivem Chlor instatu nascendi, die unproblematische Manipulation mit NaOCl gegenüber dem Chlorgas. Das NaOCl ist nicht nur besser dosierbar, sondern hat auch grosse Vorteile in bezug auf die Arbeitssicherheit und den Umweltschutz und ist auch günstiger in den Investitions- und Betriebskosten.

Eine weitere Verbesserung gegenüber anderen Chlorierungsverfahren ist der Umstand, dass bei diesem Verfahren die Chlorierung bei Zimmertemperatur durchgeführt werden kann. Nach der Filtration der obigen Suspension erhält man ein Au-, Pd-, Pt-, Se- und Te-haltiges Filtrat, das in einer anderen Verfahrensstufe weiterbehandelt wird.

Der AgCl-haltige Filtrationsrückstand wird unter Zuhilfenahme eines Extraktions- und Filterhilfsmittels mit Ammoniak-Lösung bei Zimmertemperatur und unter guter Rührung gelaugt, das AgCl als $Ag(NH_3)_2Cl$ herausextrahiert, während man den nach dem Filtrieren und Waschen zurückbleibenden Filterkuchen wieder in den Schachtofen zurückführt.

Das Ag-haltige Filtrat versetzt man in einem gasdichten Reaktor unter Rühren mit einer $Cu^+$-Lösung und reduziert das im $Ag(NH_3)_2Cl$ enthaltene $Ag^+$ zu Ag-Metall.

Reaktionsgleichung:

$Ag(NH_3)_2Cl + CuCl + 2\,NH_3 \rightarrow Cu(NH_3)_4Cl_2 + Ag$

Als $Cu^+$-Verbindung kann CuCl, $M^+CuCl_2$ oder $M^{++}(CuCl_2)_2$ verwendet werden und der Zusatz dieser Verbindungen zur ammonialkalischen $Ag^+$-Lösung kann sowohl in neutraler, saurer oder in ammonialkalischer Lösung erfolgen.

Das abgeschiedene Silber wird abfiltriert, gewaschen, getrocknet und ohne Zusatz von Schmelz-Hilfsmitteln geschmolzen.

Die Reinheit des Ag-Metalles beträgt: 99,98% Ag.

Aus dem Filtrat der Ag-Fällung wird durch Zusatz einer genügend grossen Menge an Kalkhydrat und anschliessender Destillation die Hauptmenge des eingesetzten $NH_3$ wiedergewonnen. Als Destillationsrückstand wird ein mit etwas Kalk verunreinigtes Kupferoxychlorid erhalten, das in den Betrieb zurückgeführt wird. Das Filtrat kann in den Vorfluter eingeleitet werden.

Reaktionsgleichung:

$4\,Cu(NH_3)_4Cl_2 + 3\,Ca(OH)_2 \rightarrow$
$CaCl_2 + 3\,Cu(OH)_2 \cdot CuCl_2 + 16\,NH_3$

Bei der Anwendung eines grossen Überschusses an Kalkhydrat kann an Stelle von Kupferoxychlorid auch CuO entstehen.

Beispielsbeschreibung anhand des Blockschemas:

Der Anodenschlamm kann vorher in bekannter Weise vom Blei, Kupfer und Nickel befreit werden. Beispielsweise durch folgende Vorbehandlung:

150 kg Anodenschlamm (ca. 4% Ag, 40% Pb, 8% Cu, 6% Ni) wurden in einem Rührkessel mit 500 l 10%iger $H_2SO_4$ unter Lufteinleiten bei ca. 90–100 °C ca. 2–3 Stunden gelaugt, das säurelösliche Kupfer und Nickel aus dem Schlamm herausgelöst, das Reaktionsgemisch über eine Filterpresse abfiltriert und gut gewaschen (Stufe 1). Der erhaltene Filterkuchen wurde dann in einem Reaktor mit Wasser auf 400 l aufgerührt, auf 80 °C erhitzt und unter Rühren und Verwendung eines Antischaummittels in kleinen Anteilen mit 30 kg Soda (= kleiner Überschuss) versetzt. Dabei wird das im Schlamm enthaltene $PbSO_4$ in $PbCO_3$ umgewandelt. Der abfiltrierte und sulfatfrei gewaschene Schlamm wurde wieder im Reaktor aufgeschlämmt und durch Zusatz einer verdünnten Salpetersäure Pb als $Pb(NO_3)_2$ in Lösung gebracht, das durch Filtration vom Schlamm abgetrennt wurde (Stufe 2).

69,5 kg des so vom Blei, Kupfer und Nickel befreiten Anodenschlammes wurden dann in einem gasdichten Reaktor (Stufe 3) mit verdünnter Salzsäure zu einem Volumen von 50 l suspendiert. In diese Suspension wurde bei Zimmertemperatur und unter Rühren langsam eine konzentrierte NaOCl-Lösung eingeleitet. In ca. 1½ Stunden war die Suspension vollständig chloriert, die Temperatur stieg von 22 °C auf 35 °C an. Das Reaktionsgemisch wurde über eine gasdichte Filterpresse abfiltriert (Stufe 4), gut gewaschen und die Lösung, das gesamte Au, Pd, Pt, Se und einen Teil des Te enthaltend, einer getrennten Aufarbeitung zugeführt. Der Filterkuchen, das gesamte Silber als AgCl enthaltend, wurde mit 10 kg Grünsiegel-Kalk (= Kreide mit 99,5% $CaCO_3$) als Extraktions- und Filterhilfsmittel im Verhältnis 5:1 vermischt und dann mit 10%igem Ammoniak auf 60 l aufgeschlämmt (Stufe 5). Die Suspension wurde 3 Stunden gerührt, um das gesamte AgCl als $Ag(NH_3)_2Cl$ zu lösen. Diese Suspension wurde ebenfalls über eine gasdichte Filterpresse filtriert und gut gewaschen (Stufe 6). Der dabei anfallende Rest-Schlamm wurde wieder in den betriebseigenen Schachtofen eingesetzt.

Das $Ag^+$-haltige Filtrat wurde mit einem kleinen Überschuss einer neutralen $NaCuCl_2$-Lösung versetzt (Stufe 7) und das $Ag^+$ quantitativ zu Ag-Metall (Pulver) gefällt. Nach dem Filtrieren, Waschen und Trocknen (Stufe 8 und 11) wurde das Silberpulver in einem Graphittiegel zu Reinstsilber mit einem Ag-Gehalt von 99,98% verschmolzen (Stufe 12).

Das Filtrat wurde zunächst mit ca. 5 kg Hydratkalk (Kalziumhydroxid) versetzt, das freie $NH_3$ abdestilliert (Stufe 9), der dabei anfallende Destillationsrückstand abfiltriert (Stufe 10) und in den Betrieb zurückgeführt, während das Filtrat in den Vorfluter geleitet wurde.

Die Reduktion zu metallischem Silber aus der ammonialkalischen Silberdiamminchlorid-Lösung kann auch an Stelle der Zugabe einer neutralen, sauren oder ammonialkalischen $Cu^I$-Lösung gemäss vorliegender Erfindung durch Kupferpulver bzw. Messingpulver (insbesondere 80 Cu zu 20 Zn) bei Zimmertemperatur oder in der Wärme bewirkt werden, das nach Abfiltrieren, Waschen und Trocknen zu metallischem Silber mit 99,98% Ag verschmolzen wird. Dabei versetzt man das Ag-haltige Filtrat in einem gasdichten Reaktor unter Rühren mit Kupferpulver bzw. Messingpulver (z.B. 80 Cu/20 Zn) und reduziert das im $Ag(NH_3)_2Cl$ enthaltene $Ag^+$ zu Ag-Metall.

**Patentansprüche**

1. Hydrometallurgisches Verfahren zur Aufarbeitung von Anodenschlamm aus der Kupferelektrolyse und ähnlicher Rohstoffe, die ausser Silber noch Blei, Gold, Platin-Metalle, Se, Te, Sb, Sn, As, Bi, Cu, Ni, Zn, Fe, Sulfat, Chlorid, Kieselsäure u.a. enthalten können und säurelösliches Kupfer und Nickel sowie Blei durch Vorbehandlung aus dem Anodenschlamm entfernt werden, dadurch gekennzeichnet, dass der so vorbehandelte Anodenschlamm mit Salzsäure aufgeschlämmt wird, durch Zuleiten einer Natriumhypochlorit-Lösung und das dabei entstehende Chlor instatu nascendi chloriert wird, das Au-, Pt-Metalle-, Se- und Tehaltige Filtrat abgetrennt wird, während das Ag in AgCl umgewandelt wird und im Schlamm verbleibt, aus dem dann durch Extraktion mit Ammoniak das Silber herausextrahiert und die $Ag(NH_3)_2Cl$-haltige Lösung mit $Cu^+$-Verbindungen bei Zimmertemperatur oder in der Wärme und unter Rühren versetzt wird, wobei das $Ag^+$ quantitativ zu Ag-Metall gefällt und nach dem Filtrieren, Waschen und Trocknen zu Ag-Metall verschmolzen wird, während das Filtrat mit Hydratkalk versetzt wird, der Ammoniak durch Destillation wiedergewonnen und der nach dem Filtrieren entstehende Filterkuchen in den Hüttenprozess zurückgeführt wird.

2. Verfahren nach Anspruch 1, dadurch gekennzeichnet, dass der Filtrationsrückstand mit Kreidepulver im Verhältnis 5:1 vermischt und bei Zimmertemperatur unter Rühren mit 10%iger Ammoniak-Lösung 3 bis 6 Stunden gelaugt wird, um das gesamte AgCl in das lösliche Silberdiamminchlorid Ag $(NH_3)_2Cl$ überzuführen, worauf die Lösung vom Rückstand abfiltriert wird.

3. Verfahren nach Anspruch 2, dadurch gekennzeichnet, dass das Silber aus der ammonialkalischen Silberdiamminchlorid-Lösung durch Zugabe einer neutralen, sauren oder ammonialkalischen $Cu^I$-Lösung bei Zimmertemperatur oder in der Wärme zu metallischem Silber reduziert und nach dem Abfiltrieren, Waschen und Trocknen zu metallischem Silber mit 99,98% Ag verschmolzen wird.

4. Verfahren nach Anspruch 3, dadurch gekennzeichnet, dass als $Cu^I$-Verbindungen Lösungen von CuCl oder $M^ICuCl_2$ oder $M^{II}(CuCl_2)_2$ oder auch deren feste Formen verwendet werden.

5. Verfahren nach Anspruch 3, dadurch gekennzeichnet, dass das kupfertetramminchlorid-haltige Filtrat von der Silberabtrennung mit Hydratkalk versetzt und durch Erhitzen zum Sieden der Ammoniak abdestilliert und zurückgewonnen wird, während der Filterkuchen nach der Filtration wieder dem Hüttenbetrieb zurückgeführt wird.

6. Verfahren zur Aufarbeitung von Anodenschlamm aus der Kupferelektrolyse und ähnlicher Rohstoffe, die ausser Silber noch Blei, Gold, Platin-Metalle, Se, Te, Sb, Sn, As, Bi, Cu, Ni, Zn, Fe, Sulfat, Chlorid, Kieselsäure u.a. enthalten können und säurelösliches Kupfer und Nickel sowie Blei durch Vorbehandlung aus dem Anodenschlamm entfernt werden, dadurch gekennzeichnet, dass der so vorbehandelte Anodenschlamm mit Salzsäure aufgeschlämmt wird, durch Zuleiten einer Natriumhypochlorit-Lösung und das dabei entstehende Chlor instatu nascendi chloriert wird, das Au-, Pt-Metalle-, Se- und Tehaltige Filtrat abgetrennt wird, während das Ag und AgCl umgewandelt wird und im Schlamm verbleibt, der Filtrationsrückstand mit Kreidepulver im Verhältnis 5:1 vermischt wird, bei Zimmertemperatur unter Rühren mit 10%iger Ammoniak-Lösung 3 bis 6 Stunden gelaugt wird, um das gesamte AgCl in das lösliche Silberdiamminchlorid $Ag(NH_3)_2Cl$ überzuführen, worauf die Lösung vom Rückstand abfiltriert wird, das Silber aus der ammonialkalischen Silberdiamminchlorid-Lösung durch Zugabe von Kupfer- bzw. Messingpulver (z.B. 80% Cu/20% Zn) bei Zimmertemperatur oder in der Wärme zu metallischem Silber reduziert und nach dem Abfiltrieren, Waschen und Trocknen zu metallischem Silber mit 99,98% Ag verschmolzen wird.

**Claims**

1. Hydrometallurgical process for the reprocessing of anode slime from copper electrolysis and similar raw materials which, apart from silver, can also contain lead, gold, platinum metals, Se, Te, Sb, Sn, As, Bi, Cu, Ni, Zn, Fe, sulphate, chloride, silicic acid, etc. and acid-soluble copper and nickel as well as lead can be removed from the anode slime by pretreatment, characterized in that the thus pretreated anode slime is suspended with hydrochloric acid, chlorinated in statu nascendi by feeding in a sodium hypochloride solution and the resulting chlorine, the Au and Pt metals as well as the Se and Te-containing filtrate is separated, whilst the Ag is converted into AgCl and remains in the slime, from which the silver is then extracted by extraction with ammonia and the $Ag(NH_3)_2Cl$-containing solution is mixed with $Cu^+$ compounds at room temperature or in the heat and accompanied by stirring, the $Ag^-$ is quantitatively precipitated to

metallic silver and after filtering, washing and drying is melted to metallic silver, whilst the filtrate is mixed with calcium hydroxide, the ammonia recovered by distillation and the filter cake left behind after filtering is returned to the metallurgical process.

2. Process according to claim 1, characterized in that the filtration residue is mixed with chalk powder in the ratio 5:1 and leached at room temperature and accompanied by stirring with a 10% ammonia solution for 3 to 6 hours, in order to convert all the AgCl into soluble silver diammine chloride $Ag(NH_3)_2Cl$, the solution then being separated from the residue.

3. Process according to claim 2, characterized in that the silver is reduced to metallic silver from the ammonialkaline silver diammine chloride solution by adding a neutral, acid or ammonia-alkaline $Cu^I$ solution at room temperature or in the heat and is melted to metallic silver with 99,98% Ag following filtration, washing and drying.

4. Process according to claim 3, characterized in that the $Cu^I$ compounds can be constituted by solutions of CuCl or $M^ICuCl_2$ or $M^{II}(CuCl_2)_2$ or their solid forms.

5. Process according to claim 3, characterized in that the copper tetrammine chloride-containing filtrate from the silver separation process is mixed with calcium hydroxide and by heating to boiling the ammonia is distilled and recovered, whilst the filter cake is returned to the metallurgical process following filtration.

6. Process for the reprocessing of anode slime from copper electrolysis and similar raw materials which, apart from silver, also can contain lead, gold, platinum metals, Se, Te, Sb, Sn, As, Bi, Cu, Ni, Zn, Fe, sulphate, chloride, silicid acid, etc. and acid-soluble copper and nickel as well as lead are removed by pretreatment from the anode slim, characterized in that the thus pretreated anode slime is suspended with hydrochloric acid, chlorinated by feeding in a sodium hypochloride solution and the resulting chlorine in statu nascendi, the Au and Pt metals and Se and Te-containing filtrate is separated, whilst the Ag is converted into AgCl and is left behind in the slime, the filtration residue is mixed with chalk powder in the ratio 5:1, leached at room temperature with a 10% ammonia solution, accompanied by stirring for 3 to 6 hours, in order to convert all the AgCl into soluble silver diammine chloride $Ag(NH_3)_2Cl$, after which the solution is filtered from the residue, the silver is reduced from the ammonialkaline silver diammine chloride solution by adding copper or brass powder (e.g. 80% Cu:20% Zn) at room temperature or in the heat to metallic silver and is melted after filtering, washing and drying to metallic silver with 99,98% Ag.

**Revendications**

1. Procédé hydrométallurgique de traitement d'une boue anodique provenant de l'électrolyse du cuivre et de matières premières semblables, pouvant contenir en plus de l'argent, notamment encore du plomb, de l'or, des métaux de la famille du platine, du Se, Te, Sb, Sn, As, Bi, Cu, Ni, Zn, Fe, du sulfate, du chlorure, de l'acide silicique et dont le cuivre et le nickel ainsi que le plomb, solubles dans l'acide, ont été enlevés par un traitement préliminaire de cette boue anodique, procédé caractérisé en ce qu'on met la boue anodique ainsi prétraitée en suspension dans de l'acide chlorhydrique; par introduction d'une solution d'hypochlorite de sodium et à l'aide du chlore qui en résulte, à l'état naissant, on chlore la suspension; on sépare le filtrat contenant Au, les métaux de la famille du platine, Se et Te, cependant que l'Ag est transformé en AgCl et demeure dans la boue, dont on retire, par extraction à l'ammoniac, l'argent, et, à la solution contenant $Ag(NH_3)_2Cl$, on ajoute des composés de $Cu^+$, à la température ambiante ou à chaud et sous agitation, de sorte que le $Ag^+$ précipite quantitativement en Ag métal; après sa filtration, son lavage et son séchage, on le fait fondre pour obtenir de l'Ag métal, cependant que l'on ajoute au filtrat de la chaux hydratée ou éteinte, on récupère l'ammoniac par distillation et l'on recycle vers les opérations métallurgiques le gâteau de filtre obtenu après la filtration.

2. Procédé selon la revendication 1, caractérisé en ce qu'on mélange, au résidu de filtration, de la poudre de craie selon un rapport de 5:1 et l'on effectue à la température ambiante et sous agitation durant 3 à 6 heures la lixiviation de ce résidu à l'aide d'une solution à 10% d'ammoniac, pour transformer la totalité de AgCl en le chlorure d'argent diammine $Ag(NH_3)_2Cl$ soluble, puis l'on sépare par filtration la solution du résidu.

3. Procédé selon la revendication 2, caractérisé en ce qu'on réduit à la température ambiante ou à chaud l'argent de la solution ammoniacale de chlorure d'argent diammine, par addition d'une solution de $CU^I$ neutre, acide ou ammoniacale, et, après la filtration, le lavage et le séchage, on fait fondre l'argent pour obtenir de l'argent métallique ayant une teneur de 99,98% en Ag.

4. Procédé selon la revendication 3, caractérisé en ce qu'on utilise, comme composés de $Cu^I$, des solutions de CuCl ou de $M^ICuCl_2$ ou de $M^{II}(CuCl_2)_2$ ou, également, leurs formes solides.

5. Procédé selon la revendication 3, caractérisé en ce qu'on ajoute de la chaux hydratée ou chaux éteinte au filtrat contenant du chlorure de cuivre-tétrammine et provenant de la séparation de l'argent, et, par chauffage à l'ébullition, on chasse l'ammoniac par distillation et on le récupère, cependant qu'après sa filtration, on recycle le gâteau de filtre vers le traitement métallurgique.

6. Procédé de traitement d'une boue anodique provenant de l'électrolyse du cuivre et de matières premières semblables, pouvant contenir, en plus de l'argent, notamment encore du plomb, de l'or, des métaux de la famille du platine, Se, Te, Sb, Sn, As, Bi, Cu, Ni, Zn, Fe, du sulfate, du chlorure, de l'acide silicique et dont le cuivre et le nickel ainsi que le plomb, solubles dans l'acide, ont été enlevés par traitement préalable de la boue anodique, procédé caractérisé en ce qu'on met la boue anodique ainsi prétraitée en suspension dans de l'acide chlorhydrique; par introduction d'une solution d'hypochlorite de sodium et grâce au chlore à l'état naissant que l'on obtient ainsi, on chlore la boue; on sépare par filtration le filtrat contenant Au, les métaux de la famille du platine, Se et Te, cependant que l'Ag est transformé en AgCl et demeure dans la boue; on mélange, au résidu de filtration, de la poudre de craie selon le rapport de 5:1; on soumet à la température ambiante sous agitation durant 3 à 6 heures à lixiviation à l'aide d'une solution à 10% d'ammoniac pour transformer la totalité de AgCl en le chlorure d'argent diammine $Ag(NH_3)_2Cl$ soluble, puis l'on filtre la solution pour la séparer du résidu, on réduit l'argent de la solution ammoniacale de chlorure d'argent diammine, par addition de poudre de cuivre ou de laiton (par exemple 80% de Cu/20% de Zn) à la température ambiante ou à chaud pour obtenir de l'argent métallique et, après sa filtration, son lavage et son séchage, on fait fondre cet argent pour obtenir de l'argent métallique contenant 99,98% de Ag.

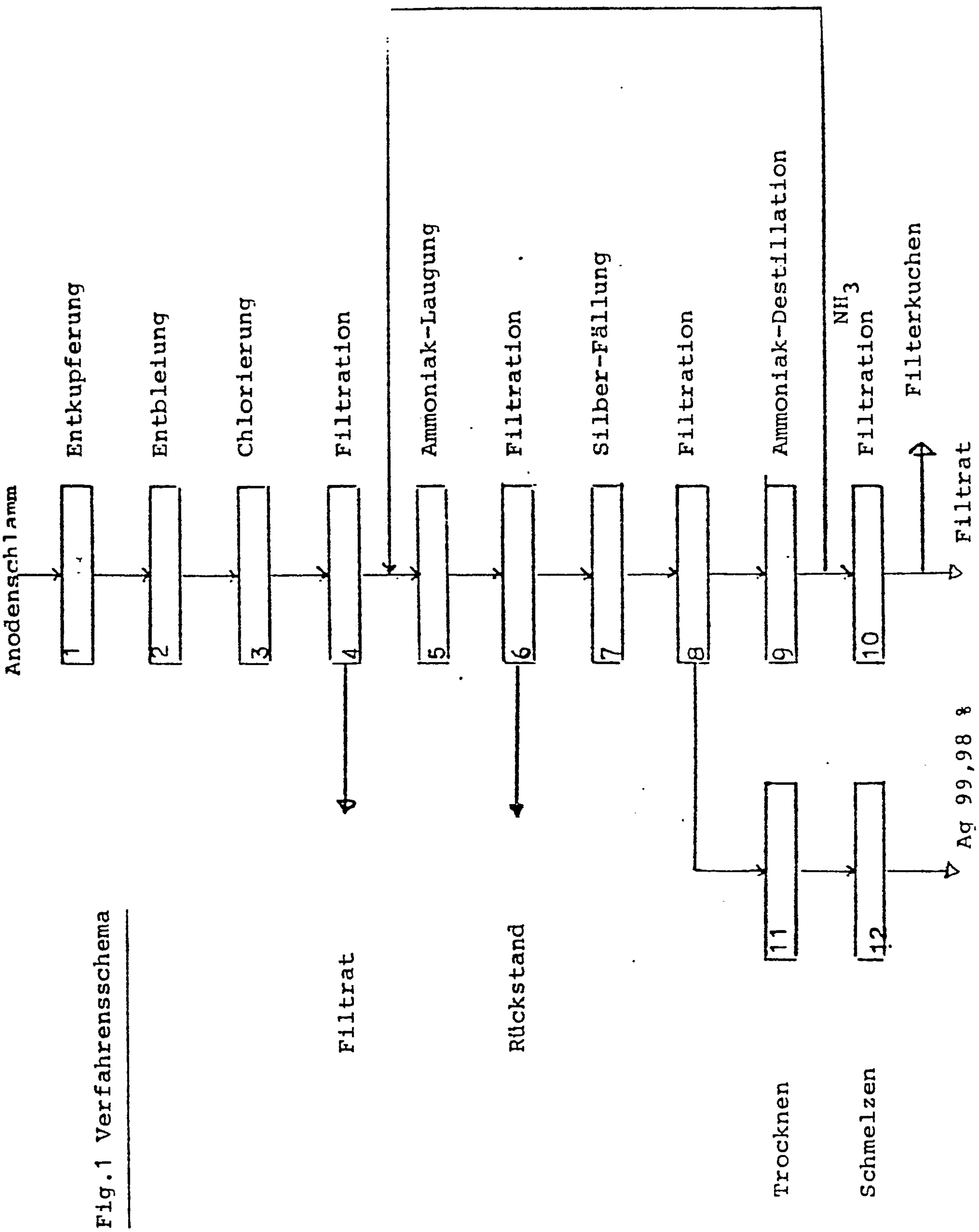


Fig.1 Verfahrensschema